# EUROPÄISCHE PATENTSCHRIFT

(11) **EP 3 728 856 B1**
(45) Veröffentlichungstag und Bekanntmachung des Hinweises auf die Patenterteilung: **07.06.2023**
(21) Anmeldenummer: 18829327.8
(22) Anmeldetag: 18.12.2018
(51) Int. Cl.: F04B 49/02, F04D 13/12, F04D 15/02

(54) **MEHRPUMPENANLAGE UND VERFAHREN ZU DEREN BETRIEB**
MULTIPLE PUMP SYSTEM AND METHOD FOR THE OPERATION THEREOF
INSTALLATION MULTI-POMPES ET PROCÉDÉ POUR SON FONCTIONNEMENT

(30) Priorität: 19.12.2017 DE 102017223189
(43) Veröffentlichungstag der Anmeldung: 28.10.2020
(73) Patentinhaber: KSB SE & Co. KGaA, 67227 Frankenthal (DE)
(72) Erfinder: ECKL, Martin, 67227 Frankenthal (DE); HAMKINS, Christoph, 67227 Frankenthal (DE); HAUCK, Patrick, 67227 Frankenthal (DE); LAUE, Stefan, 67227 Frankenthal (DE); SCHULLERER, Joachim, 67227 Frankenthal (DE)
(86) Internationale Anmeldenummer: PCT/EP2018/085608
(87) Internationale Veröffentlichungsnummer: WO 2019/121753

(56) Entgegenhaltungen:
- EP-A1- 2 940 309
- DE-A1-102014 222 962
- US-B1- 6 264 435

## Beschreibung

Die Erfindung betrifft eine Mehrpumpenanlage und ein Verfahren zu deren Betrieb. Mehrpumpenanlagen werden unter anderem in Heizungskreisläufen eingesetzt, um zu Spitzenzeiten den Bedarf an Heizungswasser zu decken. Es ist möglich, verschiedene hydraulische Arbeitspunkte mit einer unterschiedlichen Anzahl an Pumpen anzufahren. Je nach Anzahl der laufenden Pumpen stellt sich eine elektrisch aufgenommene Gesamtleistung ein. Um den Gesamtwirkungsgrad der Anlage zu optimieren, muss die Anlage für einen Arbeitspunkt immer die Anzahl der laufenden Pumpen so auswählen, dass die hydraulische Leistung, welche durch den Arbeitspunkt gegeben ist, mit der geringsten elektrischen Leistung erzeugt wird.

Mehrpumpenanlagen werden beispielsweise eingesetzt, wenn der Verbraucher einen stark schwankenden Druckbedarf aufweist. Während der Druckbedarf niedrig ist, wird nur eine Pumpe betrieben. Steigt der Bedarf an, wird eine weitere Pumpe zugeschaltet. Der optimale Zu- bzw. Abschaltzeitpunkt wird in Abhängigkeit des Durchflusses (Q) und der Förderhöhe (H) nach einem wirkungsgradorientierten Verfahren ermittelt. Falls die Pumpe über keinen Q- bzw. H-Sensor verfügt, werden Q und H über Betriebspunktschätzungen ermittelt. Dabei können anhand von Pumpenkennlinien Q und H aus der momentanen Drehzahl (n) sowie der Wellenleistung (P) geschätzt werden.

In der EP 0 864 755 B2 wird ein Verfahren zum Betrieb einer Doppelpumpe beschrieben, bei dem im Doppelbetrieb beide Pumpen mit einer synchronen Drehzahl laufen.

Die EP 1 323 986 B1 beschreibt ein Verfahren zum Steuern einer drehzahlregelbaren Heizungsumwälzpumpe. Die Drehzahl der Pumpe ist längs einer Regelkurve veränderbar. Die Regelkurve wird in Abhängigkeit des Wärmebedarfs der Heizungsanlage angepasst. Als Maß für den Wärmebedarf wird der Rohrnetzwiderstand der Heizungsanlage herangezogen. Die Pumpe wird zur Ermittlung einer flachen und einer steilen Rohrnetzkennlinie nacheinander mit mindestens zwei unterschiedlichen Drehzahlen angesteuert. Die Regelkurve wird anhand dieser ermittelten Rohrnetzkennlinien festgelegt.

In der EP 2 469 094 A2 wird ein Verfahren zum Betrieb eines Pumpenaggregats beschrieben. Das Pumpenaggregat umfasst eine Grundlastpumpe und eine Spitzenlastpumpe. Die Spitzenlastpumpe wird bedarfsweise zugeschaltet. Dabei wird das Pumpenaggregat auf einer vorgegebenen Regelkennlinie gefahren. In Abhängigkeit eines oberen und eines unteren Grenzwertes wird das Pumpenaggregat entweder mit zwei oder einer Pumpe betrieben.

Durch die DE 27 56 916 ist eine Anordnung mit fünf parallel geschalteten Kreiselpumpen zur mengenvariablen Förderung von Flüssigkeiten in Rohrleitungssystemen bekannt, wobei auf der Druckseite der Pumpenanordnung ein Drucksensor zur Erfassung des Förderdruckes angeordnet ist. Ein Mikroprozessorsystem regelt in Abhängigkeit vom Signal des Drucksensors durch Beeinflussung der Drehzahl von einer als Regelpumpe verwendeten, drehzahlvariablen Kreiselpumpe den Förderdruck der Pumpenanordnung.

Die DE 198 42 565 B4 betrifft eine Pumpenanordnung zur Druckregelung mit mindestens zwei parallel geschalteten Kreiselpumpen zur mengenvariablen Förderung von Flüssigkeiten in Rohrleitungssystemen. Auf der Druckseite der Pumpenanordnung ist ein Drucksensor zur Erfassung des Förderdruckes angeordnet. Ein Mikroprozessorsystem regelt in Abhängigkeit vom Signal des Drucksensors durch Beeinflussung der Drehzahl von mindestens einer als Regelpumpe verwendeten, drehzahlvariablen Kreiselpumpe den Förderdruck der Pumpenanordnung. Bei einem Aktivierungs- oder Deaktivierungsvorgang ermittelt das Mikroprozessorsystem den Zeitverlauf der von ihm gebildeten Stellgröße eines Drehzahlsollwertes aller aktiven drehzahlvariablen Regelpumpen und des daraus resultierenden und mit Hilfe eines Drucksensors erfassten Zeitverlaufes des Förderdrucks. Das Mikroprozessorsystem errechnet aus den Zeitverläufen von Stellgröße und Regelgröße Kenngrößen für das regelungstechnische Verhalten der Regelstrecke.

Die US 264 435 B1 offenbart ein Verfahren zum Betrieb einer Anlage mit mehreren Pumpen, die in Abhängigkeit von Anlagenbedingungen zu- und/oder abgeschaltet werden.

Die EP 2 940 309 A1 betrifft ein Verfahren zur Regelung eines Pumpensystems, das zumindest zwei hydraulisch parallel betriebene Kreiselpumpen aufweist, die jeweils durch drehzahlgeregelte, elektromotorische Antriebseinheiten angetrieben werden. Dabei wird die ermittelte elektrische Leistungsaufnahme einer der Kreiselpumpen mit der ermittelten Leistungsaufnahme einer anderen Kreiselpumpe verglichen, und in Abhängigkeit des Ergebnisses dieses Leistungsvergleichs die Drehzahl zumindest einer dieser Kreiselpumpen derart angepasst, dass die elektrischen Leistungsaufnahmen der Kreiselpumpen ein vorbestimmtes Verhältnis erreichen, insbesondere einander angeglichen werden.

Die DE 10 2014 222962 A1 offenbart ein Verfahren zum Betrieb einer Anlage mit mindestens zwei Pumpen, bei dem die Leistungsaufnahmen bei verschiedenen Pumpenanzahlen ermittelt werden, um die Anzahl mit der geringsten Gesamtleistungsaufnahme aufzufinden und die Anlage im energetisch günstigsten Zustand zu betreiben.

In der Praxis ist bekannt, dass nach dem Zu- bzw. Abschaltvorgang (im Folgenden Umschaltvorgang genannt) der geschätzte Förderstrom von dem vor dem Umschaltvorgang teilweise abweicht, ohne dass sich der Bedarf geändert hat. Dies kann zwei Ursachen haben. Zum Einen kann sich aufgrund der Umschaltung das Systemverhalten geändert haben, sodass sich tatsächlich ein anderes Q eingestellt hat. Zum Anderen ist es möglich, dass sich das Q nicht geändert hat sondern dass der Schätzalgorithmus des Zweipumpenbetriebs von dem des Einpumpenbetriebs aufgrund von Toleranzen in den Kennlinien abweicht. Tritt der letztgenannte Fall ein, so kann es passieren, dass das neue geschätzte Q nach dem Umschaltvorgang bewirkt, dass die neu zugeschaltete Pumpe sofort wieder abgeschaltet wird und sich eine Situation des permanenten Zu- und Abschaltens (Flattern) einstellt.

Um diesem permanenten Flattern zu begegnen, wird häufig eine Hysterese um den Umschaltpunkt (Q_{Hysterese}) eingeführt.

Aufgabe der Erfindung ist es, eine Mehrpumpenanlage möglichst energieeffizient zu betreiben. Das Verfahren soll eine möglichst lange Lebensdauer der Pumpen gewährleisten. Zudem soll sich das Verfahren möglichst einfach in bestehenden Anlagen inte-grieren lassen. Weiterhin soll das Verfahren sich an geänderte Betriebsbedingungen anpassen. Weiterhin sollen Geräuschentwicklungen reduziert werden.

Diese Aufgabe wird durch ein Verfahren mit den Merkmalen des Hauptanspruchs und einer Anlage mit dem nebengeordneten Anspruch gelöst. Bevorzugte Varianten sind den Unteransprüchen, der Beschreibung und den Zeichnungen zu entnehmen.

Bei dem Verfahren werden Pumpen in Abhängigkeit eines Schaltpunktes zu -bzw. abgeschaltet. Um den Schaltpunkt werden Schaltschwellen vorgegeben, die im Folgenden auch als "Hysteresegrenzen" bezeichnet werden. Es erfolgt eine Ermittlung der Häufigkeit an Schaltvorgängen innerhalb eines Zeitintervalls. Erfindungsgemäß werden die Schaltschwellen in Abhängigkeit der Häufigkeit der Schaltvorgänge verändert.

Durch diese Optimierung der Schaltschwellen wird sowohl verhindert, dass zu enge Schaltschwellen eingestellt werden, die zu einem Flattern führen, als auch zu weite Schaltschwellen, welche die Energieeffizienz verschlechtern.

Bei einer besonders vorteilhaften Variante der Erfindung findet zunächst ein lernender Betrieb statt, bei dem die Schaltschwellen variiert werden. Die optimalen Schaltschwellen (Q_{Hysterese}) werden in dieser ersten Phase gelernt und stetig optimiert. Zu Beginn des Verfahrens ist Q_{Hysterese} zunächst sehr klein. Jedes Mal, wenn Flattern auftritt, werden die Schaltschwellen (Q_{Hysterese}) erhöht. Sobald die Schaltschwellen ausreichend groß sind, tritt kein Flattern mehr auf. Dann ist auch keine weitere Anhebung von Q_{Hysterese}, erforderlich.

Bei einer bevorzugten Variante der Erfindung werden die Schaltschwellen in einem stabilen Betrieb stetig bis zu einem gewissen Punkt abgesenkt. Dadurch kann auf Situationen reagiert werden, in denen ein Verbraucher sein Verhalten mehrfach in kurzen Zyklen ändert. Dieses zyklische Verbraucherverhalten könnte von der Steuerung als Flattern missinterpretiert werden, wodurch Q_{Hysterese} fälschlicherweise erhöht würde. Um derartige Fehlentscheidungen zu korrigieren, wird das Verfahren um diese Funktion erweitert, bei der im stabilen Betrieb Q_{Hysterese} stetig mit konstanter Geschwindigkeit abgesenkt wird, bis es eine festzulegende minimale Hysteresegrenze erreicht.

Vorzugsweise werden bei dem Verfahren bei einer Anzahl von n Pumpen insgesamt (n-1) obere Schaltschwellen und/oder (n-1) untere Schaltschwellen in einem lernenden Betrieb ermittelt.

Als besonders günstig erweist es sich, wenn eine Auswahl an zugeschalteten Pumpen aufgrund einer möglichst geringen Gesamtleistungsaufnahme erfolgt. Dazu kann zunächst die Leistungsaufnahme einer ersten Anzahl an Pumpen ermittelt werden. In einem nächsten Schritt wird die Anzahl der zugeschalteten Pumpen verändert und die Gesamtleistungsaufnahme dieser neuen Anzahl an Pumpen ermittelt. Dieser Vorgang wird mit unterschiedlichen Anzahlen an Pumpen wiederholt, so dass alle Möglichkeiten abgedeckt werden, also von einem Betrieb mit nur einer Pumpe bis im Bedarfsfall zu einem Betrieb mit der maximal möglichen Anzahl an Pumpen, die in der Anlage installiert sind. Durch einen Vergleich der Leistungsaufnahmen wird die Anzahl an Pumpen mit der geringeren Gesamtleistungsaufnahme ausgewählt.

Von einer Einheit zur Steuer- und/oder Regelung wird die Anzahl an Pumpen ermittelt, bei der der Gesamtwirkungsgrad am höchsten ist und die geringste elektrische Gesamtleistung benötigt wird. Wird bei der neuen Anzahl an Pumpen eine geringere elektrische Energie benötigt, so wird diese Anzahl beibehalten. Wird mehr Energie benötigt, dann schaltet die Einheit die Anlage auf die vorherige Anzahl an Pumpen zurück. Die Einheit speichert die Pumpenanzahl, bei der die Anlage am energieeffizientesten betrieben wird. Dadurch ist die Einheit in der Lage, jede Mehrpumpenanlage bezüglich ihrer Energieeffizienz zu optimieren.

Vorzugsweise werden bei der Anlage baugleiche Pumpen eingesetzt, die mit baugleichen Motoren betrieben werden. Als günstig erweist es sich zudem, baugleiche Frequenzumrichter einzusetzen.

Weitere Merkmale und Vorteile der Erfindung ergeben sich anhand der Beschreibung von Ausführungsbeispielen anhand von Zeichnungen und aus den Zeichnungen selbst.

Dabei zeigt
- Figur 1: eine Anlage mit mehreren Pumpen,
- Figur 2: Q-H Kennlinien in Ein- und Zweipumpenbetrieb,
- Figur 3: Änderungen von Q_{Hysterese} während unterschiedlicher Phasen.

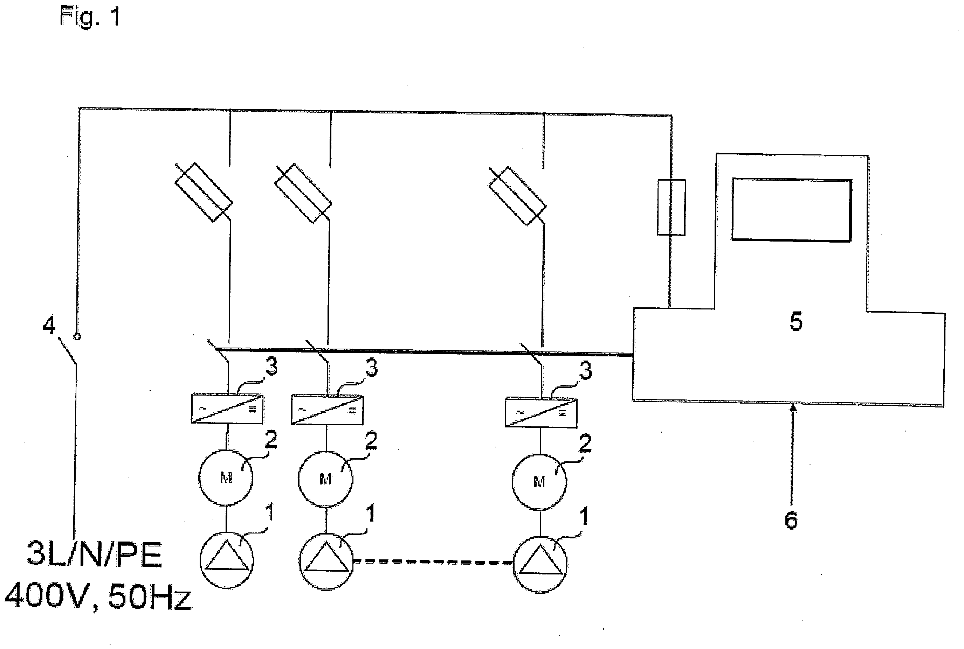

Fig. 1 zeigt eine Anlage mit mehreren Pumpen, beispielsweise eine Mehrpumpenanlage, die mehrere parallel geschaltete Pumpen 1 umfasst. Im Ausführungsbeispiel werden dabei Kreiselpumpen eingesetzt. Jede Pumpe 1 wird von einem Motor 2 angetrieben, der mit einem Frequenzumrichter 3 in Verbindung steht. Im Ausführungsbeispiel sind alle Pumpen 1 baugleich. Auch werden baugleiche Motoren und baugleiche Frequenzumrichter 3 eingesetzt.

Die Mehrpumpenanlage verfügt über einen Hauptschalter 4. Eine Einheit 5 erfasst die Signale von Sensoren 6 der Anlage. Weiterhin steht die Einheit 5 mit Aktoren der Anlage in Verbindung. Bei der Einheit 5 handelt es sich im Ausführungsbeispiel um eine Automatisierungseinheit. Diese kann als Steuer- und/oder Regeleinrichtung ausgeführt sein.

Die Einheit 5 ist dazu eingerichtet eine unterschiedliche Anzahl an Pumpen 1 zu- bzw. abzuschalten. Mittels der Frequenzumrichter 3 erfasst die Einheit 5 die elektrische Leistung der jeweiligen Pumpe 1. Je nach Anzahl der laufenden Pumpen 1 stellt sich eine elektrisch aufgenommene Gesamtleistung des Systems ein.

Vorzugsweise wird vor dem Einsatz der Pumpe, beispielsweise anhand von Prototypen beim Hersteller, die Gesamtleistungsaufnahme ermittelt, um den optimalen Umschaltpunkt zu bestimmen, zunächst für eine erste Anzahl an Pumpen 1. Es wird die Anzahl der zugeschalteten Pumpen 1 verändert und die Gesamtleistungsaufnahme der neuen Anzahl an Pumpen ermittelt. Es wird der Betriebspunkt bei der neuen Anzahl an Pumpen 1 an den Betriebspunkt mit der vorherigen Anzahl an Pumpen 1 angepasst, um eine Vergleichbarkeit zu gewährleisten. Dazu werden die Drehzahlen der Pumpen 1 geändert.

Vorzugsweise werden die Drehzahlen der Pumpen 1 anhand des Drucks oder Differenzdrucks als konstant zu haltender Führungsgröße geregelt. Der Durchfluss bzw. der Druck oder Differenzdruck kann sensorlos geschätzt werden oder von Sensoren 6 gemessen werden. Werden Pumpen 1 zugeschaltet, so senkt die Einheit 5 die Drehzahl der Pumpen 1 so weit ab, dass der gleiche Druck oder Differenzdruck wie bei der vorherigen Anzahl an Pumpen 1 erreicht wird. Die Drehzahlen der Pumpen 1 werden mittels der Frequenzumrichter 3 eingestellt.

Die Einheit 5 vergleicht die Gesamtleistungsaufnahme der neuen Anzahl an Pumpen 1 mit der Gesamtleistungsaufnahme der vorherigen Anzahl an Pumpen 1. Die Einheit 5 verfügt dazu über einen elektronischen Datenspeicher, in dem die Gesamtleistungsaufnahmen der unterschiedlichen Anzahl an Pumpen 1 hinterlegt werden, vorzugsweise vor dem Einsatz der Pumpe hinterlegt wurden. Es wird ein Vergleich der unterschiedlichen Leistungsaufnahmen durchgeführt. Die Anlage wird auf die Anzahl an Pumpen 1 mit der geringsten elektrischen Gesamtleistungsaufnahme eingestellt.

Das Zu- bzw. Abschalten von Pumpen erfolgt in Abhängigkeit eines Schaltpunktes. Um diesen Schaltpunkt werden von der Einheit 5 Schaltschwellen (Q_{Hysterese}) festgelegt. Die Einheit 5 ermittelt die Häufigkeit von Schaltvorgängen innerhalb eines Zeitintervalls und ändert die Schaltschwellen in Abhängigkeit der Häufigkeit dieser Schaltvorgänge.

Das erfindungsgemäße Verfahren ermöglicht es, eine Mehrpumpenanlage äußerst energieeffizient zu betreiben. Für das Verfahren ist keine Parametrierung erforderlich, da es selbstlernend ist. Die Anlage speichert die angefahrenen Zustände und kann nach einer Erlernungsphase die energieeffizientesten Bedingungen einstellen.

Bei dem erfindungsgemäßen Verfahren kann beispielsweise die Anlage auf einen konstanten Druck oder Differenzdruck geregelt werden.

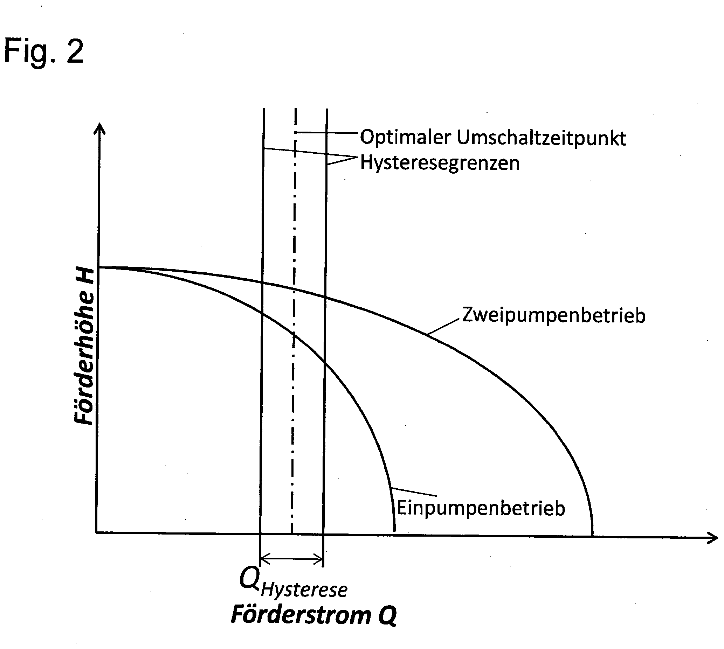

Um einem permanenten Flattern, also einem ständigen Zu- und Abschalten von Pumpen 1, zu begegnen, sind gemäß der Darstellung in Figur 2 Schaltschwellen um den optimalen Schaltpunkt vorgesehen, die auch als Hysteresegrenzen ( Q_{Hysterese} ) bezeichnet werden Das erfindungsgemäße Verfahren optimiert diese Grenzen.

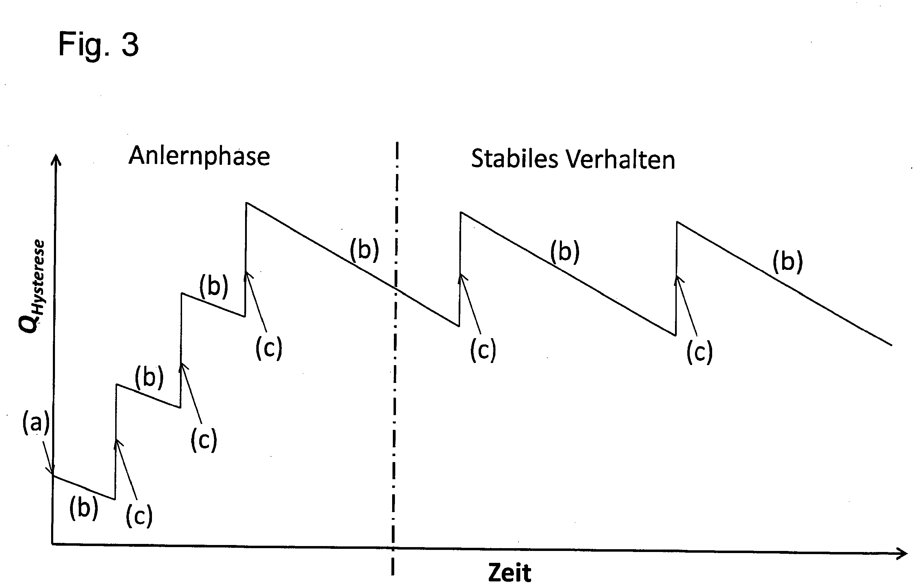

Figur 3 zeigt, dass die optimale Hysterese (Q_{Hysterese}) im Pumpenbetrieb gelernt und stetig optimiert wird. Nach dem erstmaligen Einschalten einer Anlage mit zwei Pumpen ist Q_{Hysterese} zunächst sehr klein (a). Jedes Mal, wenn Flattern auftritt, wird Q_{Hysterese} erhöht (b). Sobald Q_{Hysterese} ausreichend groß ist, findet kein Flattern mehr statt, das heißt, dass innerhalb eines bestimmten Zeitintervalls kein unmittelbares Abschalten und wieder Zuschalten (Umschalten) erfolgt, und somit auch keine weitere Anhebung von Q_{Hys-terese}. Für Anlagen mit n Pumpen werden n-1 Hysteresegrenzen gelernt.

Das erfindungsgemäße Verfahren berücksichtigt auch den Fall, dass Situationen auftreten können, in denen der Verbraucher sein Verhalten mehrfach in kurzen Zyklen ändert.

Dieses zyklische Verbraucherverhalten könnte von der Steuerung als Flattern missinterpretiert werden, wodurch Q_{Hysterese} fälschlicherweise erhöht würde. Um derartige Fehlentscheidungen zu korrigieren, wird das Verfahren um eine Funktion des Vergessens erweitert. Das Vergessen wird realisiert, indem Q_{Hysterese} stetig mit konstanter Geschwindigkeit abgesenkt wird (c), bis es eine festzulegende minimale Hysteresegrenze erreicht.

Nach dem Einschalten der Anlage ist die Hysterese Q_{Hysterese} zunächst sehr klein. Dies bewirkt ein häufiges Flattern. Die Steuerung erkennt dies und reagiert mit einem Anheben von Q_{Hysterese}. Über die gesamt Betriebsdauer wird Q_{Hysterese} stetig abgesenkt, um ein eventuell zu groß eingestelltes Q_{Hysterese} zu korrigieren. Die linke Hälfte des Bildes zeigt die Anlernphase, während Q_{Hysterese} schrittweise auf sein Optimum ansteigt. Wenn das Optimum erreicht ist, stellt sich stabiles Verhalten (rechte Bildhälfte) ein. Dabei wird Q_{Hysterese} permanent soweit abgesenkt bis erneutes Flattern auftritt. Wenn dieses stabile Verhalten über einen sehr langen Zeitraum beobachtet wird, ist die optimale Hysterese Q_{Hysterese} bekannt und der Lernalgorithmus kann abgeschaltet werden.

Die Steuer- und Regeleinheit 5 der Pumpe 1 führt zusammenfassend folgende zwei Vorgänge durch. Zum Einen eine sprunghafte Erhöhung der Schaltschwellen Q_{Hysterese} bei Auftreten eines Flatterns und zum Andern eine kontinuierliche Absenkung der Schaltschwellen Q_{Hysterese}.

## Patentansprüche

1. Verfahren zum Betrieb einer Anlage mit mindestens zwei Pumpen (1) mit folgenden Schritten:
- Zu- und/oder Abschalten von Pumpen in Abhängigkeit eines Schaltpunktes,
- Vorgabe von Schaltschwellen als Hysteresegrenzen (Q_{Hysterese}) um den Schaltpunkt,
- Ermittlung der Häufigkeit von Schaltvorgängen innerhalb eines Zeitintervalls,
- Änderung der Schaltschwellen in Abhängigkeit der Häufigkeit der Schaltvorgänge.

2. Verfahren nach Anspruch 1,
**dadurch gekennzeichnet, dass** die Schaltschwellen (Q_{Hysterese}) sprunghaft erhöht werden.

3. Verfahren nach Anspruch 1 oder 2, **dadurch gekennzeichnet, dass** ab einer bestimmten Häufigkeit von Schaltvorgängen die Schaltschwellen (Q_{Hysterese}) erhöht werden.

4. Verfahren nach einem der Ansprüche 1 bis 3, **dadurch gekennzeichnet, dass** die Schaltschwellen (Q_{Hysterese}) kontinuierlich abgesenkt werden.

5. Verfahren nach einem der Ansprüche 1 bis 4, **dadurch gekennzeichnet, dass** für eine Anzahl von n Pumpen (1) insgesamt (n-1) obere Schaltschwellen und/oder insgesamt (n-1) untere Schaltschwellen (Q_{Hysterese}) in einem lernenden Betrieb ermittelt werden.

6. Verfahren nach einem der Ansprüche 1 bis 5, **dadurch gekennzeichnet, dass** eine Auswahl an zugeschalteten Pumpen aufgrund einer möglichst geringen Gesamtleistungsaufnahme erfolgt.

7. Anlage mit mindestens zwei Pumpen (1) und mindestens einer Einheit (5) zur Steuerung und/oder Regelung, **dadurch gekennzeichnet, dass** die Einheit (5) zur Durchführung eines Verfahrens nach einem der Ansprüche 1 bis 6 eingerichtet ist.

8. Anlage nach Anspruch 7, **dadurch gekennzeichnet, dass** alle Pumpen (1) baugleich sind.

9. Anlage nach einem der Ansprüche 7 oder 8, **dadurch gekennzeichnet, dass** alle Motoren (2) zum Antrieb der Pumpen (1) baugleich sind.

10. Anlage nach einem der Ansprüche 7 bis 9, **dadurch gekennzeichnet, dass** alle Frequenzumrichter (3), die mit Motoren (2) zum Antrieb der Pumpen (1) in Verbindung stehen baugleich sind.

## Claims

1. Method for operating a system having at least two pumps (1) having the following steps:
- switching pumps on and/or off according to a switching point,
- specifying switching thresholds as hysteresis limits (Q_{Hysteresis}) around the switching point,
- determining the frequency of switching procedures within a time interval,
- altering the switching thresholds according to the frequency of the switching procedures.

2. Method according to Claim 1, **characterized in that** the switching thresholds (Q_{Hysteresis}) are sharply increased.

3. Method according to Claim 1 or 2, **characterized in that** the switching thresholds (Qnysteresis) are increased from a predetermined frequency of switching procedures.

4. Method according to one of Claims 1 to 3, **characterized in that** the switching thresholds (Q_{Hysteresis}) are continuously reduced.

5. Method according to one of Claims 1 to 4, **characterized in that**, for a number of n pumps (1), a total of (n-1) upper switching thresholds and/or a total of (n-1) lower switching thresholds (Qnysteresis) are determined in a learning operation.

6. Method according to one of Claims 1 to 5, **characterized in that** a selection of switched-on pumps takes place on the basis of a lowest possible total power consumption.

7. System having at least two pumps (1) and at least one control unit (5), **characterized in that** the unit (5) is designed to carry out a method according to one of Claims 1 to 6.

8. System according to Claim 7, **characterized in that** all pumps (1) are structurally identical.

9. System according to one of Claims 7 or 8, **characterized in that** all motors (2) for driving the pumps (1) are structurally identical.

10. System according to one of Claims 7 to 9, **characterized in that** all frequency converters (3) which are connected with motors (2) for driving the pumps (1) are structurally identical.

## Revendications

1. Procédé pour faire fonctionner une installation comprenant au moins deux pompes (1), comprenant les étapes suivantes :
- mise en circuit et/ou hors circuit de pompes en fonction d'un point de commutation,
- prédéfinition de seuils de commutation en tant que limites d'hystérésis (Q_{Hysterese}) autour du point de commutation,
- détermination de la fréquence des opérations de commutation à l'intérieur d'un intervalle de temps,
- modification des seuils de commutation en fonction de la fréquence des opérations de commutation.

2. Procédé selon la revendication 1, **caractérisé en ce que** les seuils de commutation (Q_{Hysterese}) sont augmentés brusquement.

3. Procédé selon la revendication 1 ou 2, **caractérisé en ce que** les seuils de commutation (Q_{Hysterese}) sont augmentés à partir d'une fréquence déterminée d'opérations de commutation.

4. Procédé selon l'une des revendications 1 à 3, **caractérisé en ce que** les seuils de commutation (Q_{Hysterese}) sont continuellement diminués.

5. Procédé selon l'une des revendications 1 à 4, **caractérisé en ce que** pour un nombre n de pompes (1), au total (n-1) seuils de commutation hauts et/ou au total (n-1) seuils de commutation bas (Q_{Hysterese}) sont déterminés dans un mode d'apprentissage.

6. Procédé selon l'une des revendications 1 à 5, **caractérisé en ce qu'**une sélection de pompes mises en circuit s'effectue sur la base d'une puissance consommée totale la plus faible possible.

7. Installation comprenant au moins deux pompes (1) et au moins une unité (5) servant à la commande et/ou la régulation, **caractérisée en ce que** l'unité (5) est conçue pour mettre en œuvre un procédé selon l'une des revendications 1 à 6.

8. Installation selon la revendication 7, **caractérisée en ce que** toutes les pompes (1) sont de construction identique.

9. Installation selon l'une des revendications 7 ou 8, **caractérisée en ce que** tous les moteurs (2) servant à l'entraînement des pompes (1) sont de construction identique.

10. Installation selon l'une des revendications 7 à 9, **caractérisée en ce que** tous les variateurs de fréquence (3) qui sont connectés aux moteurs (2) servant à l'entraînement des pompes (1) sont de construction identique.
